# EUROPÄISCHE PATENTSCHRIFT

(11) **EP 0 684 916 B1**
(45) Veröffentlichungstag und Bekanntmachung des Hinweises auf die Patenterteilung: **11.11.1998**
(21) Anmeldenummer: 95902736.8
(22) Anmeldetag: 19.12.1994
(51) Int. Cl.: B61H 11/08, F16D 57/06

(54) **BREMSEINRICHTUNG FÜR EIN SCHIENENFAHRZEUG, INSBESONDERE EIN SCHIENENTRIEBFAHRZEUG UND SCHIENENFAHRZEUG MIT EINER DERARTIGEN BREMSEINRICHTUNG**
BRAKING DEVICE FOR A RAIL VEHICLE, IN PARTICULAR A LOCOMOTIVE, AND A RAIL VEHICLE FITTED WITH SUCH A BRAKING DEVICE
SYSTEME DE FREINAGE POUR VEHICULE SUR RAILS, EN PARTICULIER POUR LOCOMOTIVE, ET VEHICULE SUR RAILS MUNI D'UN TEL SYSTEME DE FREINAGE

(30) Priorität: 24.12.1993 EP 93810907
(43) Veröffentlichungstag der Anmeldung: 06.12.1995
(73) Patentinhaber: SLM Schweizerische Lokomotiv- und Maschinenfabrik AG, CH-8401 Winterthur (CH)
(72) Erfinder: LUZI, Armin, CH-8542 Wiesendangen (CH)
(74) Vertreter: Trieblnig, Adolf
(86) Internationale Anmeldenummer: CH9400239
(87) Internationale Veröffentlichungsnummer: WO9518032

(56) Entgegenhaltungen:
- EP-A- 0 251 073
- CH-A- 334 773
- DE-B- 1 074 427
- DE-C- 651 617
- US-A- 2 334 629
- US-A- 3 159 246

## Beschreibung

Die Erfindung betrifft eine Bremseinrichtung nach dem Oberbegriff des Patentanspruchs 1 sowie ein mit einer derartigen Bremseinrichtung ausgestattetes Schienenfahrzeug.

Eine aus der DE-PS 651 617 bekannte Bremseinrichtung der genannten Art enthält eine hydrostatische Bremse mit einer in einem Druckmittelkreislauf angeordneten Zahnradpumpe, welche auf einem im Abstand von einem Schienenrad angeordneten Schwenkhebel angebracht ist, der mit dem Kolben eines vom Führerstand oder selbsttätig aktivierbaren Druckluftzylinders gekoppelt ist. Zum Bremseh des Fahrzeuges soll durch Betätigen des Druckluftzylinders die Zahnradpumpe über den Schwenkhebel verschwenkt und mit einem ausserhalb des Pumpengehäuses angeordneten Antriebsrad an das Schienenrad angepresst und über dieses angetrieben werden. Das durch die Zahnradpumpe geförderte Druckmittel durchströmt einen im Druckmittelkreislauf angeordneten Kühler und eine Drossel, die je nach der gewünschten Bremswirkung geregelt wird. Die schwenkbar angeordnete Zahnradpumpe mit dem bei jedem Bremsvorgang an das Schienenrad anzupressenden Antriebsrad wird durch relativ hohe mechanische Kräfte belastet. Die bekannte Vorrichtung erfordert auch einen relativ grossen Einbauraum, der bei Schienentriebfahrzeugen, insbesondere in Drehgestellen von Lokomotiven, häufig nicht zur Verfügung steht.

Eine aus der EP-A-0 251 073 bekannte Radbremse für Fahrzeuge, insbesondere Luft- und Raumfahrzeuge, enthält eine Zahnradpumpe, die destilliertes Wasser in einem Kreislauf über ein Drosselventil in einen mit einem Ueberdruckventil versehenen Vorratsbehälter und aus diesem zurück zur Pumpe fördert. Bei einer Ausführung der bekannten Bremseinrichtung ist die gesamte Bremsanlage mit dem Vorratsbehälter im Rad angeordnet, wobei der drehbare Radkörper als Vorratsbehälter dient. Die Zahnradpumpe enthält ein äusseres Zahnrad, das durch eine Aussenverzahnung mit dem Radkörper gekoppelt ist, mehrere kleine Zahnräder, die mit einer Innenverzahnung des äusseren Zahnrades kämmen, und ein freilaufendes inneres Zahnrad, dessen Aussenverzahnung beim Drehen mit den kleinen Zahnrädern kämmt. Die bekannte Radbremse enthält keine im Flüssigkeitskreislauf angeordnete Kühlvorrichtung und keine umschaltbare Kupplungsvorrichtung, über welche die Zahnradpumpe mit dem Rad koppelbar und von diesem entkoppelbar ist. Eine derartige Bremseinrichtung wäre als Betriebsbremse für einen Radsatz eines Schienenfahrzeuges nicht geeignet.

Der Erfindung liegt die Aufgabe zugrunde, eine Bremseinrichtung mit einem für Dauerbremsungen geeigneten Bremssystem der eingangs genannten Art zu schaffen, welches mit geringen Einbaumassen und geringem Gewicht ausgeführt und mit geringem Aufwand in das Fahrzeug eingebaut und gewartet werden kann, und welches eine hohe Bremsleistung ohne wesentliche zeitliche Begrenzung erbringt und die Räder nicht blockieren kann.

Diese Aufgabe wird erfindungsgemäss durch die im kennzeichnenden Teil des Patentanspruchs 1 angegebenen Merkmale gelöst.

Vorteilhafte Weiterbildungen des Erfindungsgegenstandes sind in den abhängigen Ansprüchen angegeben. Ein mit einer erfindungsgemässen Bremseinrichtung versehenes Schienenfahrzeug ist Gegenstand des Anspruchs 11.

Die erfindungsgemässe Bremseinrichtung zeichnet sich aus durch eine einfache, kompakte Bauweise des Bremssystems, welche auch bei den in Schienenfahrzeugen, insbesondere in Drehgestellen einer Lokomotive, gegebenen beengten Platzverhältnissen eine für Einbau und Revisionen gut zugängliche Anordnung gestattet.

Weitere Einzelheiten und Merkmale ergeben sich aus der folgenden Beschreibung von in der Zeichnung schematisch dargestellten Ausführungsbeispielen der Erfindung, in Verbindung mit den Ansprüchen. Es zeigen:
- Fig. 1: Ein mit einer erfindungsgemässen Bremseinrichtung versehenes Schienenfahrzeug in einer Seitenansicht;
- Fig. 2: einen Teil des Schienenfahrzeugs in einer Draufsicht entsprechend der Linie II-II in Fig. 1;
- Fig. 3: eine Einzelheit der Bremseinrichtung in einer Teilansicht mit Teilschnitt entsprechend der Linie III-III in Fig. 1;
- Fig. 4: die Einzelheit der Bremseinrichtung in einem Schnitt entsprechend der Linie IV-IV in Fig. 3 und ein Schaltschema mit weiteren Teilen der Bremseinrichtung;
- Fig. 5: eine Teilansicht mit Teilschnitt einer Einzelheit einer Bremseinrichtung nach einer abgewandelten Ausführungsform;
- Fig. 6: eine Einzelheit der Bremseinrichtung in einem Schnitt entsprechend der Linie VI-VI in Fig.5 und ein Schaltschema mit weiteren Teilen der Bremseinrichtung;
- Fig. 7: eine Einzelheit einer Bremseinrichtung entsprechend derjenigen nach Fig.6, nach einer weiteren Ausführungsform.

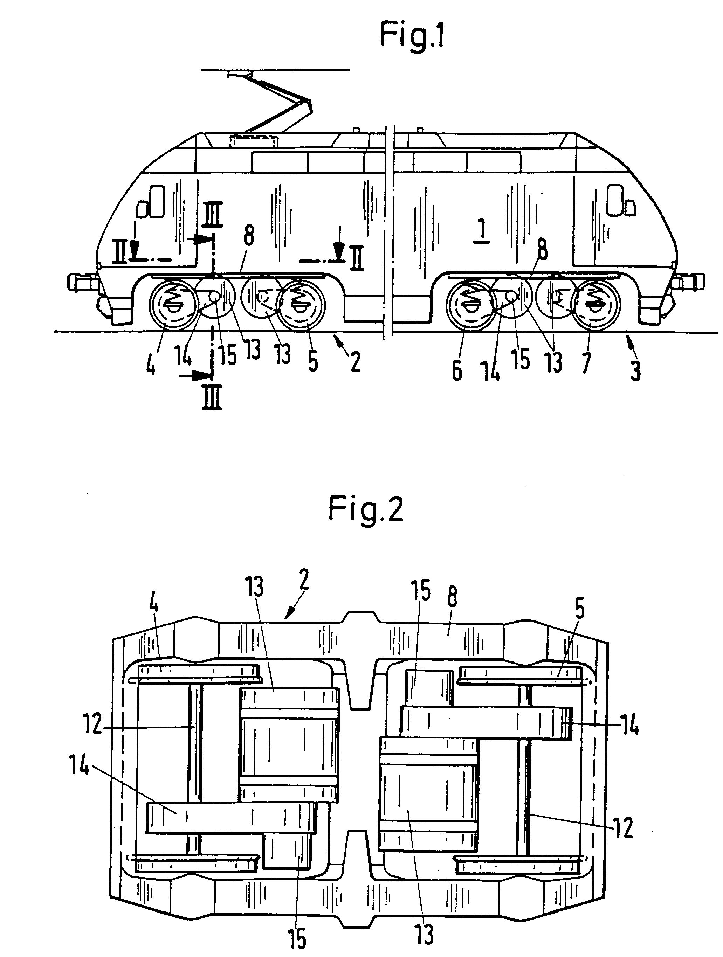

Das Schienenfahrzeug nach Fig. 1, darstellungsgemäss eine vierachsige elektrische Lokomotive, enthält einen Fahrzeugkasten 1 und zwei Drehgestelle 2 und 3, welche je einen Drehgestellrahmen 8 und zwei angetriebene Radsätze 4 und 5 bzw. 6 und 7 aufweisen, die mit je einer Antriebsvorrichtung gekuppelt sind, welche einen Fahrmotor 13 und ein Getriebe 14 enthält.

Das Schienenfahrzeug enthält eine Bremseinrichtung mit mehreren, voneinander unabhängig betätigbaren Bremssystemen. Die Fahrmotoren 13 sind auf Generatorbetrieb umschaltbar und bilden je ein für Dauerbremsungen geeignetes erstes Bremssystem.Die Radsätze 4, 5, 6 und 7 sind je mit einem zusätzlichen, für Dauerbremsungen betätigbaren zweiten Bremssystem 15 versehen. Es können auch noch weitere, nicht dargestellte Bremssysteme, insbesondere zum Anhalten des Fahrzeugs bestimmte Klotzbremsen und/oder Scheibenbremsen sowie gegebenenfalls Magnetschienenbremsen, vorgesehen sein. Es ist auch eine Ausführung möglich, bei der nur eine bestimmte Anzahl, z.B. nur einer der Radsätze 4, 5, 6 und 7 mit dem zusätzlichen Bremssystem 15 versehen ist.

Die Bremssysteme 15 sind je einer der Antriebsvorrichtungen zugeordnet und enthalten je eine mit einem Antriebsteil, dargestellungsgemäss einem verlängerten Abschnitt einer Antriebswelle 16 des Fahrmotors 13, kuppelbare hydrostatische Pumpe 17.

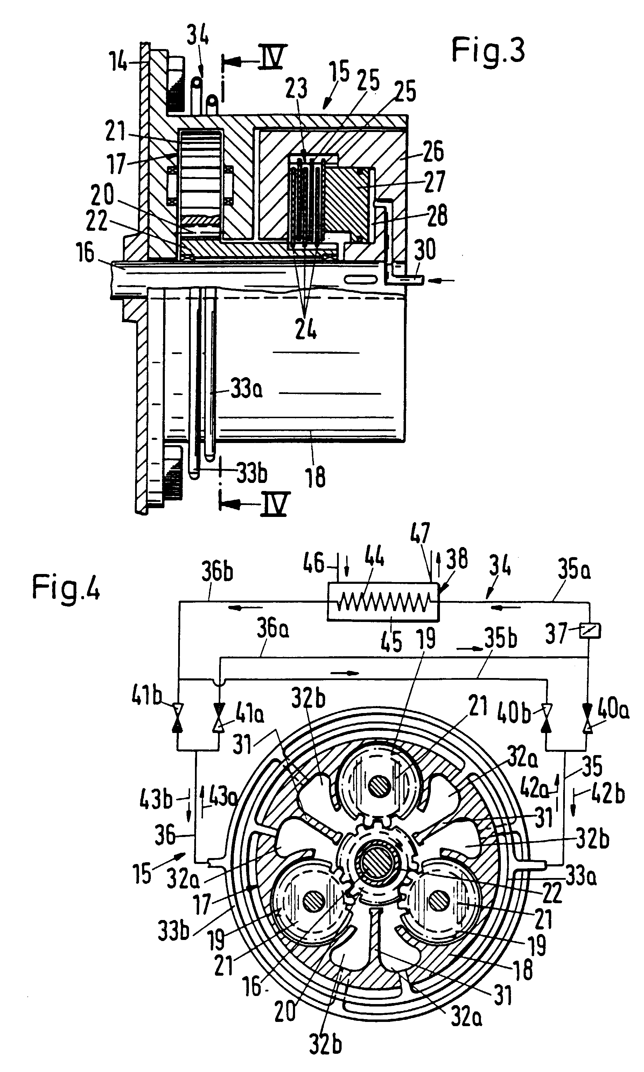

Eine mögliche Ausführungsform der Pumpe 17 als Zahnradpumpe zeigen die Fig. 3 und 4. Die Pumpe 17 enthält ein am Gehäuse des Getriebes 14 anbringbares Pumpengehäuse 18, ein auf der Antriebswelle 16 drehbar gelagertes Sonnenrad 20 und drei Drehkolben in Form von mit dem Sonnenrad 20 kämmenden Planetenrädern 21, die im Pumpengehäuse 18 drehbar gelagert sind. Das Sonnenrad 20 ist darstellungsgemäss drehfest mit einer auf der Antriebswelle 16 drehbar gelagerten Hohlwelle 22 verbunden, welche über eine zum Aktivieren des Bremssystems 15 betätigbare Kupplungsvorrichtung 23 mit der Antriebswelle 16 drehfest kuppelbar ist. Es können auch zwei, vier oder mehr Planetenräder 21 vorgesehen sein.

Die Kupplungsvorrichtung 23 kann in beliebiger Weise, gemäss Fig. 3 in Form einer Lamellenkupplung, ausgeführt sein, welche eine Anzahl mit der Hohlwelle 22 drehfest verbundene innere Lamellen 24 und eine Anzahl mit der Antriebswelle 16 drehfest verbundene äussere Lamellen 25 enthält. Die Lamellen 25 sind in einem auf der Antriebswelle 16 befestigten Kupplungsteil 26 geführt, der einen in axialer Richtung der Antriebswelle 16 beweglichen, ringförmigen Schaltkolben 27 enthält. Der Schaltkolben 27 ist im Kupplungsteil 26 dichtend geführt und begrenzt mit diesem einen ringförmigen Zylinderraum 28, der über eine Zuführleitung 30 und eine nicht dargestellte Betätigungsvorrichtung an die Quelle eines Steuermediums, bei der dargestellten Ausführung an ein Druckluftsystem des Fahrzeugs, anschliessbar ist. Durch Zufuhr von Druckluft in den Zylinderraum 28 wird der Schaltkolben 27 gegen die Lamellen 24 und 25 gepresst, wobei eine reibschlüssige Verbindung zwischen der Antriebswelle 16 und dem mit der Hohlwelle 22 verbundenen Sonnenrad 20 hergestellt wird und die Planetenräder 21 angetrieben werden. Entsprechend werden die hydrostatische Pumpe 17 in Betrieb gesetzt und das Bremssystem 15 aktiviert. Durch Ablassen der Druckluft aus dem Zylinderraum 28 kann der Schaltkolben 27 entlastet und über Rückführmittel, z.B. eine nicht dargestellte Federanordnung, gegen die dargestellte Stellung zurückgeführt werden, wobei die Lamellen 24 und 25 voneinander gelöst und damit das Sonnenrad 20 und die Planetenräder 21 von der Antriebswelle 16 entkuppelt werden. Entsprechend wird der Antrieb der Pumpe 17 unterbrochen und damit das Bremssystem 15 abgeschaltet.

Die beschriebene, auf einfache Weise betätigbare Lamellenkupplung kann mit einfachen Bauteilen ausgeführt werden, welche bei geringem Wartungsaufwand auch im rauhen Bahnbetrieb eine hohe Betriebssicherheit des erfindungsgemässen Bremssystems gewährleisten.

Die Planetenräder 21 sind in bekannter Weise je in einer einen Teil ihres Umfangs umgebenden Ausnehmung 19 des Pumpengehäuses 18 angeordnet. Im Pumpengehäuse 18 sind zwischen den Planetenrädern 21 jeweils zwei durch eine Trennwand 31 unterteilte Kammern 32a und 32b ausgebildet, die je gegen das Sonnenrad 20 und das benachbarte Planetenrad 21 offen sind. Die Kammern 32a sind an eine gemeinsame erste Ringleitung 33a angeschlossen, welche in einem geschlossenen Druckmittelkreislauf 34 mit einer an die Kammern 32b angeschlossenen zweiten Ringleitung 33b verbunden ist. Der Druckmittelkreislauf 34 ist an eine nicht dargestellte Quelle eines zu fördernden Druckmittels, z.B. ein Reservoir für Hydraulikoel, angeschlossen und enthält eine Drosselvorrichtung, darstellungsgemäss ein Drosselventil 37, zum Drosseln des Druckmittelumlaufs und eine Kühlvorrichtung 38 zum Kühlen des geförderten Druckmittels.

Die Kühlvorrichtung 38 kann in beliebiger Bauweise, gemäss Fig. 4 in Form eines Wärmeübertragers ausgeführt sein, der ein vom Druckmittel durchströmbares Rohrsystem 44 und ein Gehäuse 45 aufweist, welches an eine Zuführleitung 46 und eine Abführleitung 47 eines nicht weiter dargestellten Kühlmittelkreislaufs des Schienenfahrzeuges angeschlossen ist. Die Ringleitungen 33a und 33b sind je über eine Anschlussleitung 35 bzw. 36 mit einer Förderleitung 35a bzw. 36a und einer Rückführleitung 35b bzw. 36b verbunden. Die Förderleitungen 35a und 36a sind je mit einem nur in Förderrichtung entsprechend den Pfeilen 42a bzw. 43a durchströmbaren Rückschlagventil 40a bzw. 41a versehen und über das in der Förderleitung 35a angeordnete Drosselventil 37 mit der Eintrittsseite der Kühlvorrichtung 38 verbunden. Die Rückführleitungen 35b und 36b sind je mit einem nur in Rückführrichtung entsprechend den Pfeilen 42b bzw. 43b durchströmbaren Rückschlagventil 40b bzw. 41b versehen und mit der Austrittsseite der Kühlvorrichtung 38 verbunden.

Bei einem Antrieb des Sonnenrades 20 gemäss Fig. 4 im Uhrzeigersinn entsteht in den den Planetenrädern 21 in Drehrichtung des Sonnenrads 20 benachbarten Kammern 32a je ein Unterdruck und in den Kammern 32b ein Ueberdruck. Entsprechend wird das Druckmittel gemäss Pfeil 43a über die Förderleitung 36a in die Förderleitung 35a geführt und beim Durchströmen des Drosselventils 37 gedrosselt, wobei die Planetenräder 21 und damit der mit diesen getrieblich verbundene Radsatz entsprechend abgebremst werden. Das dabei erwämte Druckmittel wird hierauf mit entsprechend reduziertem Restdruck der Kühlvorrichtung 38 zugeführt, gekühlt und über die Rücklaufleitungen 36b und 35b gemäss Pfeil 42b der ersten Ringleitung 33a zugeführt und in die Kammern 32a angesaugt.

Beim Antrieb des Sonnenrades 20 gemäss Fig. 4 gegen den Uhrzeigersinn wird das Druckmittel aus den Kammern 32a entsprechend dem gestrichelten Pfeil 42a über die erste Ringleitung 33a und die Förderleitung 35a der Kühlvorrichtung 38 zugeführt und über die Rückführleitung 36b entsprechend dem gestrichelten Pfeil 43b der zweiten Ringleitung 33b zugeführt und in die in diesem Fall einen Unterdruck aufweisenden Kammern 32b angesaugt.

Gemäss Fig. 4 ist die Förderleitung 36a zwischen dem Rückschlagventil 40a und dem Drosselventil 37 an die Förderleitung 35a angeschlossen und die Rückführleitung 35b ist zwischen der Kühlvorrichtung 38 und dem Rückschlagventil 41b an die Rückführleitung 36b angeschlossen. Entsprechend wird gewährleistet, dass das Drosselventil 37 und die Kühlvorrichtung 38, unabhängig von der jeweiligen Drehrichtung des Sonnenrades 20 bzw. von der jeweiligen Fahrtrichtung des Fahrzeugs, immer in der gleichen Richtung durchströmt werden.

Das Drosselventil 37 kann fest eingestellt oder an eine nicht dargestellte Steuereinrichtung angeschlossen sein, durch welche die Drosselwirkung und damit der Verlauf des Bremsvorganges beeinflussbar ist. Anstelle des dargestellten Drosselventils 37 kann auch eine andere, fest eingestellte oder verstellbare Drosselvorrichtung beliebiger Bauweise vorgesehen sein.

Durch geeignete Wahl der inneren Verluste der Pumpe 17 und der Drosselvorrichtung 37 wird ein vollständiges Blockieren bzw. Gleiten der Schienenräder auch bei tiefen Adhäsionskoeffizienten (zwischen Rad und Schiene) verhindert, d.h. eine minimale Drehzahl der Schienenräder bleibt auch in Extremfällen gewährleistet.

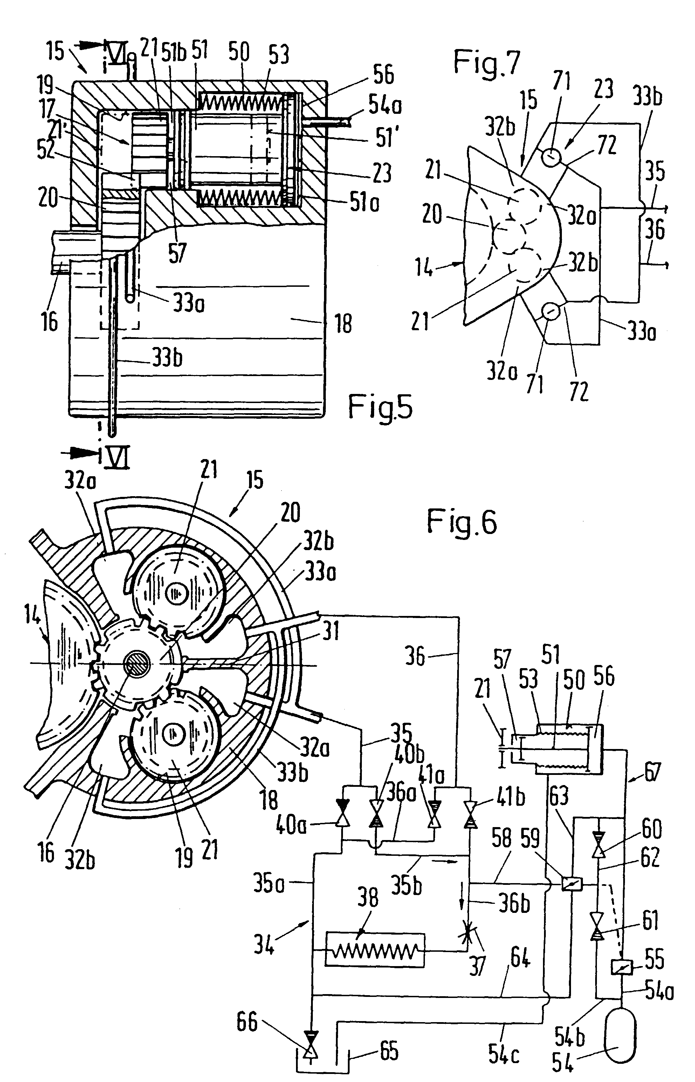

In den Ausführungsbeispielen sind einander entsprechende Teile mit gleichen Bezugszeichen versehen. Bei den Ausführungen nach den Figuren 5, 6 und 7 dient das Antriebsritzel des Fahrmotors 13 zugleich als Sonnenrad 20 für zwei Planetenräder 21 der Zahnradpumpe, die in das Gehäuse des Getriebes 14 integriert ist. Bei der Ausführung nach den Fig.5 und 6 sind die Planetenräder 21 je auf einem Verstellteil in Form eines gegen Drehung gesicherten Kolbens 51 gelagert. Die Kolben 51 sind je in einer parallel zur Antriebswelle 16 angeordneten Bohrung 50 des Gehäuses 18 zwischen einer mit vollen Linien dargestellten Ausrückstellung und einer strichpunktiert dargestellten Einrückstellung 51' verschiebbar geführt. Entsprechend sind die Planetenräder 21 je zwischen der dargestellten Leerlaufstellung, in der sie nur in einer schmalen Eingriffzone 52 mit dem Sonnenrad 20 zusammenwirken, und einer strichpunktierten Kuppelstellung 21' verstellbar, in der sie über die volle Zahnbreite mit dem Sonnenrad 20 in Eingriff sind. Die in der Leerlaufstellung verbleibende Eingriffzone 52 gewährleistet, dass die Planetenräder 21 dauernd mitdrehen und somit bei Bremsbeginn nicht beschleunigt werden müssen. Zur Aktivierung des Bremssystems 15 werden die Planetenräder 21 in die Kuppelstellung 21' verschoben, in der sie mit dem Sonnenrad 20 die Zahnradpumpe bilden.

Die Kolben 51 können je durch eine Federanordnung, darstellungsgemäss durch Druckfedern 53, in der für die Förderung des Druckmittels unwirksamen Ausrückstellung gehalten werden, wobei zwischen den Kammern 32a und 32b eine Art Kurzschlussströmung entsteht. Die Kolben 51 können in den Bohrungen 50 je mit einem gewissen Radialspiel geführt sein. Der dadurch entstehende Spalt wirkt als Drosselstelle und beeinflusst die Verschiebegeschwindigkeit. Die Kolben 51 können darstellungsgemäss je mit unterschiedlich grossen Stirnflächen 51a und 51b ausgeführt sein, welche in der Bohrung 50 je einen Zylinderraum 56 bzw. 57 begrenzen und welche im Bremsbetrieb vom gleichen Mediumdruck beaufschlagt werden können, wobei die Kolben 51 je gegen die Wirkung der Druckfedern 53 in der Einrückstellung 51' gehalten werden.

Das Schaltschema nach Fig.6 zeigt den Druckmittelkreislauf 34 und eine an diesen angeschlossene Steueranordnung 67 zum Ein- und Ausrücken der Kolben 51, von denen im Schema nur einer angedeutet ist. Die Steueranordnung 67 umfasst eine Verbindungsleitung 54a, über welche die Zylinderräume 56 an einen hydraulischen Speicher 54 angeschlossen sind, und eine Rücklaufleitung 54c, welche die Bohrungen 50 mit einem Behälter 65 für das Druckmedium verbindet. Die Verbindungsleitung 54a enthält ein Absperrventil 55 und ist über Zweigleitungen 54b und 62 an eine mit der Förderleitung 36b verbundene Zuführleitung 58 angeschlossen, die ein zwischen zwei Durchflussstellungen verstellbares Schaltventil 59 enthält. Das Schaltventil 59 verbindet in der einen Stellung die Zuführleitung 58 mit den Zweigleitungen 54b und 62, welche je ein Rückschlagventil 61 bzw. 60 enthalten, und in der anderen Stellung eine an die Verbindungsleitung 54a angeschlossene Abführleitung 63 mit einer in den Behälter 65 führenden Rücklaufleitung 64, die ein Rückschlagventil 66 enthält.

Bei ungebremster Fahrt sind die Kolben 51 je in ihrer Ausrückstellung gehalten, wobei der hydraulische Speicher 54 und die Zweigleitungen 54a und 54b unter Druck stehen und das Absperrventil 55 geschlossen ist.

Zur Aktivierung der Bremseinrichtung 15 wird das Absperrventil 55 geöffnet, das Druckmedium strömt in den Zylinderraum 56 und bewegt den Kolben 51 in die Einrückstellung 51'. Entsprechend baut sich ein Druck auf, und das Druckmedium zirkuliert durch das Drosselventil 37 und die Kühlvorrichtung 38, wie vorstehend beschrieben. Durch die stromaufwärts des Drosselventils 37 an die Förderleitung 36b angeschlossene Zuführleitung 58 wird das Druckmedium durch das Schaltventil 59 und die Rückschlagventile 60 und 61 zum Zylinderraum 56 bzw. zum Speicher 54 geführt. Wenn der Druck in der Zweigleitung 62 den im Zylinderraum 56 und im Speicher 54 herrschenden Druck übersteigt, öffnen sich die Rückschlagventile 60 und 61, das Druckmedium strömt in den Zylinderraum 56 und lädt den Speicher 54 auf. Zugleich wird das Absperrventil 55 durch eine nicht dargestellte mechanische, hydraulische oder elektrische Steuervorrichtung geschlossen. Wenn sich der Mediumdruck im Verlaufe des Bremsvorganges verringert, schliessen sich die Rückschlagventile 60 und 61, der Druck im Zylinderraum 56 geht wegen des Abflusses durch den zwischen Kolben 51 und Bohrung 50 gebildeten Spalt weiter zurück, bis die Rückstellkraft der Druckfedern 53 überwiegt und der Kolben 51 in die Ausrückstellung zurückgestellt wird. Damit ist der Bremsvorgang beendet.

Muss der Bremsvorgang schnell beendet werden, wird das Schaltventil 59 in die Schaltstellung umgestellt, in der es die Abführleitung 63 mit der Rücklaufleitung 64 verbindet und den Abfluss des Druckmediums aus dem Zylinderraum 56 in den Behälter 65 zulässt, wobei der Kolben 51 in die Ausrückstellung zurückgestellt und der Bremsvorgang beendet wird.

Anstelle der dargestellten Steueranordnung kann auch eine andere, z.B. pneumatisch betätigbare, Verstelleinrichtung vorgesehen sein.

Bei der Ausführung nach Fig.7 sind die Planetenräder 21 unverschiebbar angeordnet. Die je dem gleichen Planetenrad 21 zugeordneten Saug-/Druckkammern 32a und 32b - darstellungsgemäss die an diese anschliessenden Abschnitte der Ringleitungen 33a und 33b - sind untereinander über eine grossvolumige, durch einen Absperrhahn 71 verschliessbare Leitung 72 verbunden. Bei geöffneten Absperrhähnen 71 entsteht an jedem Planetenrad 21 ein druckloser Oelumlauf, der sehr wenig Leistung benötigt und der den Ruhezustand der Bremseinrichtung 15 bei Fahrbetrieb darstellt. Wenn die Absperrhähne 71 geschlossen werden, ist die Verbindung zwischen den Kammern 32a und 32b unterbrochen, und die Planetenräder 21 bilden mit dem Sonnenrad 20 die Zahnradpumpe, wie vorstehend beschrieben.

Es sind zahlreiche abgewandelte Ausführungsformen der Erfindung möglich. So kann die hydrostatische Pumpe ein mit der Antriebswelle 16 drehfest verbundenes Sonnenrad 20 und ein auf der Antriebswelle 16 drehbar gelagertes, die Planetenräder 21 enthaltendes Gehäuse aufweisen, welches über eine entsprechende Lamellenkupplung oder eine andere, nicht dargestellte Kupplungsvorrichtung beliebiger Bauart mit dem Gehäuse des Getriebes 14 oder z.B. mit einem Teil des Drehgestellrahmens 8 relativ zur Antriebswelle 16 feststellbar verbunden ist. Die Kupplungsvorrichtung kann z.B. nach Art einer Scheibenbremse oder einer Bandbremse ausgebildet sein. Die hydrostatische Pumpe kann auch in einer anderen Bauweise, etwa in Form einer Zahnradpumpe mit z.B. zwei Zahnrädern, einer Flügelzellenpumpe beliebiger Bauart, einer Schraubenpumpe, einer Roots-Pumpe oder einer anderen Verdrängerpumpe ausgeführt sein. Die erfindungsgemässe Bremseinrichtung kann auch einem anderen Teil der Antriebsvorrichtung, z.B. einem Teil des Getriebes, oder gegebenenfalls einem auf einer Achse 12 des betreffenden Radsatzes 4, 5, 6 bzw. 7 angebrachten Antriebs- oder Kupplungsteil zugeordnet sein. Die erfindungsgemässe Bremseinrichtung eignet sich für Schienenfahrzeuge mit beliebiger Achsfolge bzw. beliebiger Anzahl der Radsätze und kann auch einer Laufachse eines Schienentriebfahrzeuges oder eines Waggons, oder einem mit einer derartigen Laufachse gekoppelten, z.B. getrieblich verbundenen Antriebs- bzw. Kupplungsteil zugeordnet sein.

Zusammenfassend lässt sich die Erfindung wie folgt beschreiben: Mindestens einem Radsatz 4, 5, 6, 7 des Schienenfahrzeugs ist ein Bremssystem 15 zugeordnet, welches eine hydrostatische Pumpe 17 mit geschlossenem Druckmittelkreislauf 34 und mindestens einem mit der Radsatzachse 12 antreibbar gekoppelten Drehkolben 20, 21 und eine Drosselvorrichtung 37 zum Drosseln des Druckmittelumlaufs und zum Abbremsen des angetriebenen Drehkolbens 20, 21 sowie Mittel 38 zum Kühlen des Druckmittels enthält. Die Pumpe 17 ist über eine umschaltbare Kupplungsvorrichtung 23 zwischen einem für eine Förderung des Druckmittels wirksamen, das Bremssystem 15 aktivierenden Betriebszustand und einem für die Förderung des Druckmittels unwirksamen Leerlaufzustand umstellbar. Das Bremssystem 15 erfordert einen geringen Platzbedarf und ist für Dauerbremsungen geeignet.

## Patentansprüche

1. Bremseinrichtung für ein Schienenfahrzeug, insbesondere ein Schienentriebfahrzeug, enthaltend mindestens ein für Betriebsbremsungen aktivierbares Bremssystem (15) mit einer hydrostatischen Zahnradpumpe (17), welche in einem mit einer Drosselvorrichtung (37) und einer Kühlvorrichtung (38) versehenen, geschlossenen Druckmittelkreislauf (34) angeordnet ist und mindestens einen Drehkolben aufweist, und mit einer Kupplungsvorrichtung (23), über welche der Drehkolben mit einem Radsatz (4, 5, 6, 7) des Schienenfahrzeuges koppelbar ist, dadurch gekennzeichnet, dass die Zahnradpumpe (17) einen mit der Achse des Radsatzes (4, 5, 6, 7) gekoppelten Antriebsteil (16) enthält und als Drehkolben ein auf dem Antriebsteil (16) angeordnetes Sonnenrad (20) und mindestens zwei mit diesem kämmende Planetenräder (21) aufweist, und dass die Kupplungsvorrichtung (23) mindestens einen dem Sonnenrad (20) und/oder den Planetenrädern (21) zugeordneten Verstellteil enthält, über den die Zahnradpumpe (17) zwischen einem eine betriebsmässige Förderung des Druckmittels zulassenden Betriebszustand und einem für eine solche Förderung unwirksamen Leerlaufzustand umschaltbar ist.

2. Bremseinrichtung nach Anspruch 1, dadurch gekennzeichnet, dass der Druckmittelkreislauf (34) Steuermittel (40a, 40b, 41a, 41b) enthält, die eine von der jeweiligen Drehrichtung des Sonnenrades (20) unabhängige Durchströmung der Drosselvorrichtung (37) in einer vorbestimmten Strömungsrichtung bewirken.

3. Bremseinrichtung nach Anspruch 1 oder 2, dadurch gekennzeichnet, dass die Zahnradpumpe (17) an einer mit der Achse (12) des Radsatzes (4, 5, 6, 7) getrieblich verbundenen Antriebsvorrichtung (13, 14) angeordnet ist, und dass der Antriebsteil (16) der Zahnradpumpe (17) mit einem gegenüber der Achse (12) des Radsatzes (4, 5, 6, 7) mit unterschiedlicher Drehzahl umlaufenden Teil dieser Antriebsvorrichtung (13, 14) verbunden ist.

4. Bremseinrichtung nach einem der vorangehenden Ansprüche, dadurch gekennzeichnet, dass das Sonnenrad (20) auf dem Antriebsteil (16) drehbar gelagert ist und dass die Kupplungsvorrichtung (23) als Verstellteil einen in axialer Richtung dieses Antriebsteils (16) beweglichen Schaltkolben (27) enthält, über den das Sonnenrad (20) mit einem auf dem Antriebsteil (16) drehfest angeordneten Kupplungsteil (26) kuppelbar ist.

5. Bremseinrichtung nach einem der Ansprüche 1 bis 3, dadurch gekennzeichnet, dass als Sonnenrad (20) ein Zahnrad eines den Radsatz (4, 5, 6, 7) und eine Antriebsvorrichtung (13) verbindenden Getriebes (14) vorgesehen ist.

6. Bremseinrichtung nach einem der vorangehenden Ansprüche, dadurch gekennzeichnet, dass die Kupplungsvorrichtung (23) mit mindestens einem fluidisch betätigbaren Verstellteil (27, 51) ausgeführt ist.

7. Bremseinrichtung nach einem der vorangehenden Ansprüche, dadurch gekennzeichnet, dass die Kupplungsvorrichtung (23) in Form einer Lamellenkupplung ausgeführt ist (Fig. 3).

8. Bremseinrichtung nach einem der vorangehenden Ansprüche, dadurch gekennzeichnet, dass die Kupplungsvorrichtung (23) als Verstellteil mindestens einen parallel zur Achse des Sonnenrades (20) beweglich angeordneten Kolben (51) enthält, auf dem eines der mit dem Sonnenrad (20) zusammenwirkenden Planetenräder (21) angebracht und zwischen einer Einrückstellung (21'), in welcher die Zähne dieser Zahnräder (20, 21) im wesentlichen mit ihrer ganzen Breite ineinandergreifen, und einer seitlich versetzten Ausrückstellung verstellbar ist, in welcher die Zähne je nur mit einem Teilabschnitt (52) ihrer Breite ineinandergreifen.

9. Bremseinrichtung nach einem der vorangehenden Ansprüche, dadurch gekennzeichnet, dass die Kupplungsvorrichtung (23) über eine hydraulische Steueranordnung (67) betätigbar ist, welche an den Druckmittelkreislauf (34) der Zahnradpumpe (17) angeschlossen ist.

10. Bremseinrichtung nach einem der Ansprüche 1 bis 3 und 5, dadurch gekennzeichnet, dass als Kupplungsvorrichtung (23) eine Einrichtung zum Herstellen einer Kurzschlussverbindung zwischen der Saugseite und der Druckseite der Zahnradpumpe (17) vorgesehen ist, welche Einrichtung mindestens eine an mindestens eine Saugkammer und an mindestens eine Druckkammer der Zahnradpumpe (17) angeschlossene Verbindungsleitung (72) mit einem Absperrorgan (71) enthält, welches zwischen einer eine Aktivierung des Bremssystems (15) zulassenden Schliessstellung und einer die Aktivierung verhindernden, eine Kurzschlussströmung zwischen der Saugkammer und der Druckkammer zulassenden Offenstellung verstellbar ist.

11. Schienenfahrzeug mit einer Bremseinrichtung nach einem der vorangehenden Ansprüche.

## Claims

1. Braking device for a rail vehicle, in particular for a rail traction vehicle, containing at least one braking system (15) which can be activated for operational braking, comprising a hydrostatic gear pump (17) which is arranged in a closed pressure medium circuit (34), provided with a restrictor device (37) and a cooling device (38) and which has at least one rotary piston (20), and a coupling device (23) via which the rotary piston can be coupled to a wheel set (4, 5, 6, 7) of the rail traction vehicle, characterized in that the gear pump (17) contains a drive part (16) coupled to the axle of the wheel set (4, 5, 6, 7) and has a sun wheel (20) arranged on the drive part (16) as the rotary piston and at least two planet wheels meshing with the sun wheel, and in that the coupling device (23) contains at least one adjustment part associated with the sun wheel (20) and/or the planet wheels (21) via which the gear pump (17) can be switched over between an operational state permitting an operational conveyance of the pressure medium, and an idling state which is ineffective for such a conveyance.

2. Braking device in accordance with claim 1, characterised in that the pressure medium circuit (34) comprises control means (40a, 40b, 41a, 41b) which bring about a flow through the restrictor device (17) in a predetermined flow direction independent of the respective direction of rotation of the sun wheel (20).

3. Braking device in accordance with claim 1 or claim 2, characterised in that the gear pump (17) is arranged on a drive apparatus (13, 14) transmissively connected to the axle (12) of the wheel set (4, 5, 6, 7), and in that the drive part (16) of the gear pump (17) is connected with a part of this drive apparatus (13, 14) rotating with a different rotational speed relative to the axle (12) of the wheel set (4, 5, 6, 7).

4. Braking device in accordance with one of the preceding claims, characterised in that the sun wheel (20) is rotatably journalled on the drive part (16), and in that the coupling device (23) contains a switching piston (27) movable in the axial direction of this drive part as the adjustment part via which the sun wheel (20) can be coupled to a coupling part (26), which is rotationally fixedly arranged on the drive part (16).

5. Braking device in accordance with one of the preceding claims 1 to 3, characterised in that a gear wheel of a transmission (14) connecting the wheel set (4, 5, 6, 7) and a drive apparatus (13) is provided as the sun wheel (20).

6. Braking device in accordance with one of the preceding claims, characterised in that the coupling apparatus (23) is formed with at least one fluid actuatable adjustment part (27, 51).

7. Braking device in accordance with one of the preceding claims, characterised in that the coupling apparatus (23) is implemented in the form of a multi-plate clutch (Fig. 3).

8. Braking device in accordance with one of the preceding claims, characterised in that the coupling apparatus (23) of the gear pump contains at least one piston (51) arranged to be movable parallel to the axle of the sun wheel (20) as the adjustment part, and on which one of the planet wheels (21) that cooperates with the sun wheel (20) is mounted and is adjustable between an engaged position (21') in which the teeth of these gear wheels (20, 21) mesh over substantially their full width and a laterally displaced disengagement position in which the teeth each only mesh over a portion (52) of their width.

9. Braking device in accordance with one of the preceding claims, characterised in that the coupling apparatus (23) is actuatable via a hydraulic control arrangement (67) connected to the pressure medium circuit (34) of the gear pump (17).

10. Braking device in accordance with one of the claims 1 to 3 and 5, characterised in that a device for forming a short-circuit connection between the suction side and the pressure side of the gear pump (17) is provided as the coupling apparatus (23), said device comprising at least one connection line (72) having a shut-off device (71) and being connected to at least one suction chamber of the pump (17) and to at least one pressure chamber of the pump (17), said shut-off device (71) being adjustable between a closed position which permits an activation of the braking system (15) and an open position which prevents the actuation and permits a short-circuit flow between the suction chamber and the pressure chamber.

11. Rail vehicle having a braking device in accordance with one of the preceding claims.

## Revendications

1. Dispositif de freinage pour un véhicule ferroviaire, notamment un véhicule ferroviaire automoteur, comprenant au moins un système de freinage (15) apte à être activé pour des freinages de fonctionnement, avec une pompe hydrostatique à engrenages (17), qui est disposée dans un circuit de fluide sous pression fermé (34) équipé d'un dispositif d'étranglement (37) et d'un dispositif de refroidissement (38), et qui présente au moins un piston rotatif, et avec un dispositif d'accouplement (23) par lequel le piston rotatif peut être accouplé à une paire de roues (4, 5, 6, 7) du véhicule ferroviaire, caractérisé en ce que la pompe à engrenages (17) comporte une pièce d'entraînement (16) accouplée à l'essieu de la paire de roues (4, 5, 6, 7) et présente comme piston rotatif une roue solaire (20) disposée sur la pièce d'entraînement (16) et au moins deux roues planétaires (21) engrenant avec celle-ci, et en ce que le dispositif d'accouplement (23) comporte au moins une pièce d'ajustement associée à la roue solaire (20) et/ou aux roues planétaires (21) par laquelle la pompe à engrenages (17) peut être commutée entre un état de fonctionnement permettant un convoyage fonctionnel du fluide sous pression et un état de fonctionnement à vide inefficace pour un tel convoyage.

2. Dispositif de freinage selon la revendication 1, caractérisé en ce que le circuit de fluide sous pression (34) comporte des moyens de commande (40a, 40b, 41a, 41b) qui provoquent un écoulement, indépendant de la direction de rotation respective de la roue solaire (20), à travers le dispositif d'étranglement (37) dans une direction d'écoulement prédéterminée.

3. Dispositif de freinage selon la revendication 1 ou 2, caractérisé en ce que la pompe à engrenages (17) est disposée à un dispositif d'entraînement (13, 14) relié, quant à la transmission, à l'essieu (12) de la paire de roues (4, 5, 6, 7) et en ce que la pièce d'entraînement (16) de la pompe à engrenages (17) est reliée à une pièce de ce dispositif d'entraînement (13, 14) tournant à une vitesse de rotation différente relativement à l'essieu (12) de la paire de roues (4, 5, 6, 7).

4. Dispositif de freinage selon l'une des revendications précédentes, caractérisé en ce que la roue solaire (20) est logée de manière rotative sur la pièce d'entraînement (16) et que le dispositif d'accouplement (23), en tant que pièce d'ajustement, comporte un piston de commutation (27) déplaçable dans la direction axiale de cette pièce d'entraînement (16) par lequel la roue solaire (20) peut être accouplée à une pièce d'accouplement (26) disposée d'une manière immobile en rotation sur la pièce d'entraînement (16).

5. Dispositif de freinage selon l'une des revendications 1 à 3, caractérisé en ce qu'il est prévu comme roue solaire (20) une roue dentée d'un engrenage (14) reliant la paire de roues (4, 5, 6, 7) et un dispositif d'entraînement (13).

6. Dispositif de freinage selon l'une des revendications précédentes, caractérisé en ce que le dispositif d'accouplement (23) est réalisé avec au moins une pièce d'ajustement (27, 51) actionnable fluidement.

7. Dispositif de freinage selon l'une des revendications précédentes, caractérisé en ce que le dispositif d'accouplement (23) est réalisé sous la forme d'un embrayage à disques (figure 3).

8. Dispositif de freinage selon l'une des revendications précédentes, caractérisé en ce que le dispositif d'accouplement (23) , en tant que pièce d'ajustement, comporte au moins un piston (51) disposé mobile parallèlement à l'axe de la roue solaire (20) sur lequel est disposé l'une des roues planétaires (21) coopérant avec la roue solaire (20) et est réglable entre une position d'engagement (21'), où les dents de ces roues dentées (20, 21) engrènent sensiblement avec toute leur largeur et une position de désengagement décalée latéralement, où les dents engrènent respectivement seulement avec un tronçon partiel (52) de leur largeur.

9. Dispositif de freinage selon l'une des revendications précédentes, caractérisé en ce que le dispositif d'accouplement (23) est actionnable par un dispositif de commande hydraulique (67) qui est raccordé au circuit de fluide sous pression (34) de la pompe à engrenages (17).

10. Dispositif de freinage selon l'une des revendications 1 à 3 et 5, caractérisé en ce qu'il est prévu comme dispositif d'accouplement (23) un dispositif pour l'établissement d'un liaison de court-circuit entre le côté aspiration et le côté pression de la pompe à engrenages (17), ce dispositif comportant au moins un conduit de liaison (72) avec un organe de blocage (71), raccordé à au moins une chambre d'aspiration et à au moins une chambre de compression de la pompe à engrenages (17), qui est ajustable entre une position de fermeture permettant l'activation du système de freinage (15) et une position d'ouverture empêchant l'activation, permettant un flux de court-circuit entre la chambre d'aspiration et la chambre de pression.

11. Véhicule ferroviaire comportant un dispositif de freinage selon l'une des revendications précédentes.
